## Europäisches Patentamt

(19) **European Patent Office**

**Office européen des brevets**

(11) Numéro de publication: **0 186 590**

**B1**

(12) # FASCICULE DE BREVET EUROPÉEN

(45) Date de publication du fascicule du brevet: 28.02.90

(51) Int. Cl.⁵: **H 02 M 1/08**

(21) Numéro de dépôt: **85402571.5**

(22) Date de dépôt: **20.12.85**

(54) Dispositif de commande de gradateur électronique.

(30) Priorité: 20.12.84 FR 8419547

(43) Date de publication de la demande:
02.07.86 Bulletin 86/27

(45) Mention de la délivrance du brevet:
28.02.90 Bulletin 90/09

(84) Etats contractants désignés:
BE DE LU

(56) Documents cité:
EP-A-0 028 890
DE-A-2 032 949
FR-A-1 348 552
US-A-3 942 041

IBM TECHNICAL DISCLOSURE BULLETIN, vol. 16, no. 9, février 1974, page 2931, New York, US; G.C. JOHARI: "Phase-control regulator with constant gain"

(73) Titulaire: R.V. Electronique, Société Anonyme dite:
Z.I. Les Carreaux
F-77440 Lizy-sur-Ourq (FR)

(72) Inventeur: Vulpillat, Roland M.
25, allée Lefebvre
F-93340 Le Raincy (FR)

(74) Mandataire: Levesque, Denys
Cabinet Beau de Loménie 55, rue d'Amsterdam
F-75008 Paris (FR)

EP 0 186 590 B1

LIBERGRAF, STOCKHOLM 1990

## Description

La présente invention se rapporte à un dispositif de commande de gradateur électronique permettant de régler, en fonction d'un signal de commande, la puissance appliquée à un appareillage récepteur par une source d'alimentation électrique alternative sensiblement sinusoïdale, comprenant un interrupteur électronique commandé dont la mise à l'état conducteur est déclenchée, au cours de chaque demi-alternance de la source d'alimentation, à un instant offrant, par rapport à la fin de la demi-alternance précédente, un déphasage variable suivant une loi de correction visant à assurer la proportionnalité de la puissance efficace appliquée à l'appareillage récepteur et de la valeur du signal de commande dont est fonction ledit déphasage.

Le principe de fonctionnement des variateurs ou gradateurs électroniques de ce genre est bien connu; il repose sur la commande en phase variable de semi-conducteurs tels que triacs ou thyristors par rapport au passage à zéro de la sinusoïde d'alimentation. Cette commande s'effectue généralement par l'intermédiaire d'un circuit électronique communément appelé déclencheur, qui reçoit lui-même une information sous la forme d'une tension continue variable, par exemple entre 0 et 10 V, ce qui permet d'avoir une commande entre 0 et 100 % de la tension efficace de sortie.

Lorsqu'on effectue le relevé de la tension efficace délivrée sur une résistance fixe en fonction de l'angle de conduction de l'interrupteur commandé pour chaque demi-alternance, on constate (et c'est là la conséquence de la forme sinusoïdale de la tension d'alimentation) que cette tension efficace suit une loi non linéaire en fonction de l'angle de conduction (cf. figure courbe S). Ce phénomène bien connu est très gênant, car toute commande de gradateur en angle de conduction proportionnel à la tension de commande donne une tension de sortie efficace non représentative de la progressivité de la commande. En particulier, l'effet de la commande est très faible en début et en fin de plage de variation, alors qu'il est relativement brutal en milieu de course. Ce défaut est particulièrement gênant dans le cas où l'utilisateur désire une proportionalité quasi parfaite entre la grandeur de commande et la tension efficace de sortie (commande d'éclairage en particulier).

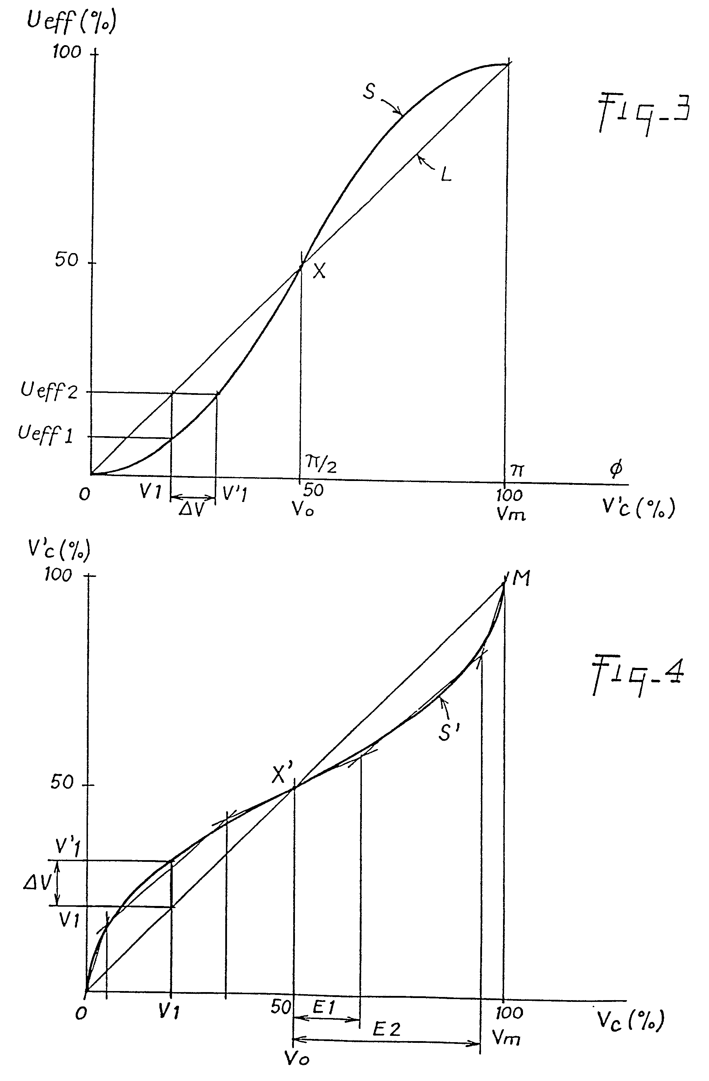

Afin de combattre ce défaut et dans le but d'obtenir une bonne linéarité entre la grandeur de commande et la tension efficace de sortie, les différents constructeurs de ce type de matériel ont adopté des dispositifs de linéarisation divers procurant la correction nécessaire. Généralement, les dispositifs connus utilisent une source de courant variant au cours de chaque demi-alternance afin de créer une rampe de tension non linéaire en fonction du temps (correction dynamique). Cette rampe de tension a une caractéristique de forme voisine de celle de la variation de la tension efficace en fonction de l'angle de conduction et permet ainsi, à l'aide d'un comparateur, d'obtenir une variation de la tension efficace de sortie linéaire par rapport à la grandeur de commande (cf. figure 3, droite L).

De tels dispositifs à correction dynamique, connus par exemple par les documents DE-A-2 032 949 et US-A-3 942 041, donnent un excellent résultat à la condition de disposer d'une tension d'alimentation parfaitement sinusoïdale et stable en amplitude. Par contre, si l'une de ces conditions n'est pas remplie, ce qui est le cas le plus commun pour les réseaux de distribution électrique, la commande de la source à courant variable (généralement réalisée à partir de la tension d'alimentation) ne correspond plus à la correction désirée.

Afin de pallier cet inconvénient, certains constructeurs utilisent un dispositif auxiliaire de régulation de la tension d'alimentation afin de fournir aux éléments dynamiques de correction une tension sinusoïdale de référence correspondant aux critères de qualité nécessaires. Ceci n'est toutefois concevable que pour alimenter des groupes de gradateurs, mais n'est pas économiquement valable pour des gradateurs individuels.

Dans le but de remédier à ces divers inconvénients, l'invention a pour objet un dispositif de commande ou déclencheur du genre défini au début, dans lequel le déphasage de l'instant de déclenchement de l'interrupteur commandé est créé proportionnellement à la valeur d'un signal continu qui varie avec le signal de commande conformément à ladite loi de correction par l'intermédiaire d'un générateur de fonction.

Cette disposition est avantageuse en ce sens que la correction est réalisée indépendamment de la tension de la source d'alimentation alternative (dans sa forme et surtout dans son amplitude), et cela d'une manière statique, c'est-à-dire qu'à une grandeur de commande fixe correspond un signal continu corrigé également fixe, ce qui permet une meilleure maîtrise des phénomènes et une précision accrue.

Ledit signal continu est de préférence engendré, à partir du signal de commande, par un générateur de fonction fournissant, grâce à un réseau non linéaire, une approximation par segments rectilignes raccordés de la loi de correction.

Dans une forme d'exécution avantageuse, lorsque la courbe représentant la loi de correction comporte deux moitiés symétriques par rapport à un point central, le réseau non linéaire est conçu pour ne fournir l'approximation par segments rectilignes que de l'une des moitiés de ladite courbe, tandis qu'un réseau auxiliaire de commutation associé à ce réseau lui permet de fournir l'approximation de l'une et l'autre des moitiés symétriques. On obtient ainsi une parfaite symétrie de correction de part et d'autre dudit point central.

Le réseau non linéaire peut alors comprendre une section linéaire et une section non linéaire, tandis que seule la section non linéaire est commutée par le réseau auxiliaire, la section linéaire jouant naturellement son rôle, sans commutation dans les deux moitiés de courbe. Ce réseau auxiliaire peut, de façon très simple, être constitué par un pont de quatre redresseurs, entre deux bornes opposées duquel est connectée la section non linéaire du réseau, la section linéaire de ce dernier étant connectée entre les autres bornes opposées du pont, lesquelles constituent les bornes d'entrée et de sortie de l'ensemble formé par le réseau non linéaire et le réseau auxiliaire.

Un tel réseau non linéaire, éventuellement avec le réseau de commutation associé, peut être mis en oeuvre en tant que l'une des impédances d'entrée d'un amplificateur opérationnel pour former avec son impédance de contre-réaction, constituée par une résistance pure, l'ensemble de correction non linéaire désiré.

Il convient en outre d'appliquer à l'entrée non inverseuse dudit amplificateur opérationnel une tension continue correspondant au point central de symétrie de la courbe représentant la loi de correction, la valeur de cette tension pouvant être réglable afin d'autoriser un décalage dudit point central.

On peut prévoir en pratique que le réseau non linéaire, avec le réseau de commutation éventuellement associé, constitue un circuit bipolaire réalisé sous forme d'un module interchangeable à deux bornes. Ce mode de réalisation sera particulièrement apprécié par les utilisateurs désirant changer la courbe de correction de leurs gradateurs; ils pourront le faire sans avoir à changer l'ensemble de ces appareils.

D'une manière plus particulière, un dispositif selon l'invention peut comprendre un comparateur qui reçoit d'une part un signal issu d'un générateur de rampes et formé de rampes linéaires successives commençant et finissant en synchronisme avec les demi-alternances de la source d'alimentation et d'autre part le signal continu issu du générateur de fonction, et qui déclenche ainsi, à l'instant où ces deux signaux viennent à égalité, l'amorçage de l'interrupteur électronique commandé.

D'autres caractéristiques et avantages de l'invention ressortiront plus clairement de la description qui va suivre, en regard des dessins annexés, d'un exemple de réalisation non limitatif.

- La figure 1 représente le schéma simplifié d'un gradateur équipé d'un dispositif de commande selon l'invention.
- La figure 2 illustre le principe de fonctionnement d'un tel gradateur.
- Les figures 3 et 4 présentent deux graphiques illustrant le mode de correction mis en oeuvre dans le dispositif de la figure 1.
- La figure 5 est un schéma expliquant le principe d'obtention de la correction.
- La figure 6 représente le schéma détaillé de l'amplificateur de correction du dispositif de la figure 1.

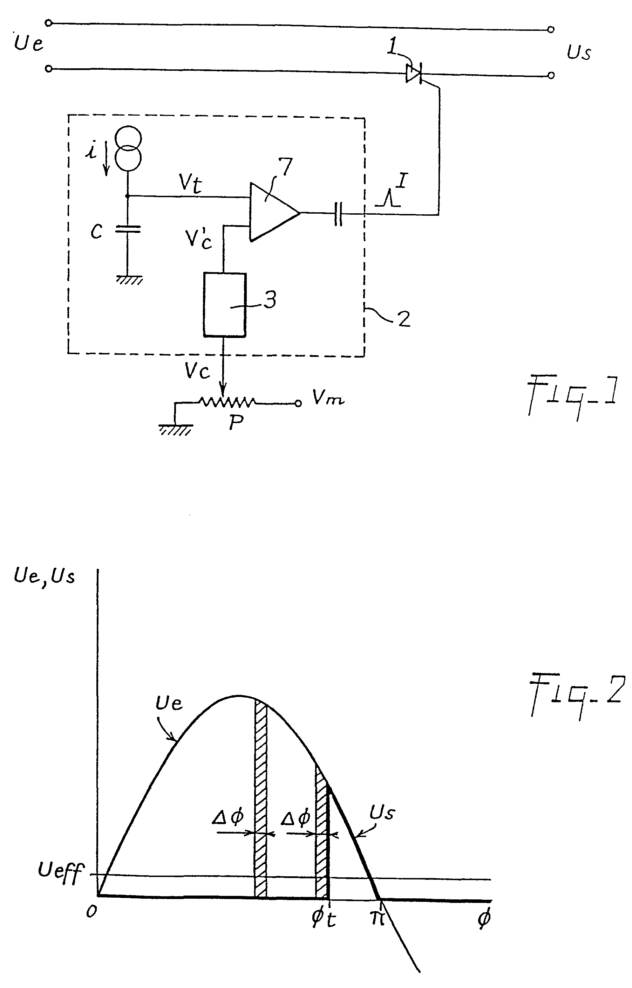

Un gradateur de puissance du genre considéré comprend essentiellement (figure 1) un interrupteur commandé 1 à semi-conducteur et un circuit 2 de déclenchement de cet interrupteur. L'interrupteur commandé 1 est placé en série avec une source de puissance électrique délivrant une tension alternative Ue (généralement sinusoïdale); il peut s'agir d'un triac, d'une paire de thyristors montés tête-bêche ou éventuellement de tout autre dispositif semi-conducteur à caractéristique de conduction bidirectionnelle équivalente. L'amorçage de l'interrupteur 1 est déclenché par une impulsion I engendrée par le circuit 2 à un instant t de phase $\varphi t$ variable au cours de chaque demi-période $0 - \pi$ de la tension Ue de la source de puissance (figure 2). Il en résulte que chaque demi-alternance de la tension Ue se trouve tronquée, de sorte que la tension de sortie Us, formée de l'ensemble de ces demi-alternances tronquées' présente une valeur efficace Ueff variable en fonction de la phase de l'instant t dans la demi-période. Cette phase est réglable par application d'une tension de commande continue variable Vc au circuit de déclenchement 2.

Il est clair que la valeur de Ueff n'est pas fonction linéaire de $\varphi t$. En effet, comme le montre la figure 2, une même variation $\Delta \varphi$ de la phase de l'instant de déclenchement entraîne une variation de la surface des demi-alternances tronquées de Us qui est plus grande lorsque ledit instant correspond sensiblement au maximum des demi-alternances de Ue. En raison de la forme sinusoïdale de ces dernières, la relation entre Ueff et $\varphi t$ est d'allure sinusoïdale (figure 3). Lorsque $\varphi t$ passe de zéro à sa valeur maximale $\pi$, Ueff croît d'abord lentement, puis plus vite, puis de nouveau lentement, suivant la courbe S, au lieu de croître linéairement selon la droite L.

Si la phase $\varphi t$ de l'instant t est définie proportionnellement à une tension continue V'c, la même courbe S représente les variations de Ueff en fonction de V'c. Dès lors, on voit par exemple qu'une valeur V1 donnée à V'c conduit à une valeur Ueff1 de la valeur efficace de la tension de sortie Us. Pour obtenir la valeur Ueff2 correspondant à une variation linéaire définie par la droite L, il faudrait donner à V'c une valeur V'1 = V1 + $\Delta$V.

Cela signifie qu'en formant, à partir d'une tension de commande Vc, la tension V'c en ajoutant à la tension Vc les quantités $\Delta$V définies par les écarts d'abscisses existant entre la courbe S et la droite L de la figure 3 pour chaque valeur de Ueff, on obtient une variation de Ueff linéaire et proportionnelle à la valeur de la tension Vc.

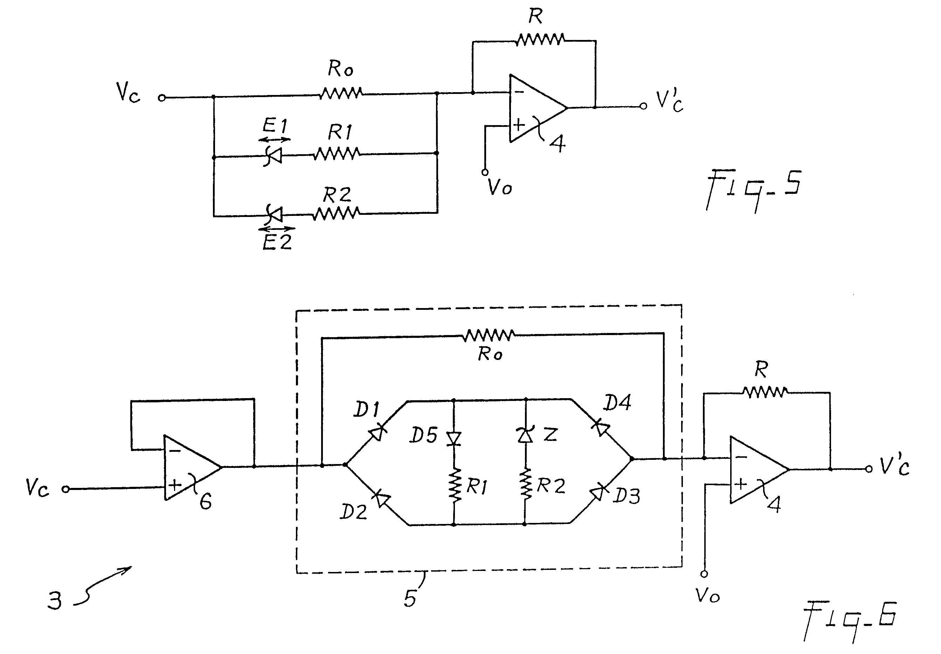

La loi de variation de V'c en fonction de Vc, représentée par la courbe S' (figure 4) qui se déduit de la courbe S par une symétrie par rapport à la droite L, est obtenue au moyen d'un générateur de fonction 3. Celui-ci réalise une approximation par segments rectilignes de la courbe S', à l'aide d'un circuit dont le principe est illustré à la figure 5.

Un amplificateur opérationnel 4, bouclé par une résistance R, comporte une impédance d'entrée formée de trois branches connectées en parallèle, savoir une résistance Ro, une résistan-R1 en série avec un élément à seuil de tension E1, et une résistance R2 en série avec un élément à seuil de tension E2 > E1, ces deux dernières branches formant la section non linéaire de ladite impédance. A l'entrée non inverseuse de l'amplificateur opérationnel 4 est appliquée une tension Vo.

Quand la tension d'entrée Vc croît à partir d'une valeur égale à Vo, le gain entre la tension de sortie V'c et cette tension Vc est (en valeur absolue) d'abord égal à R/Ro. Puis quand Vc atteint et dépasse la valeur Vo + E1, la résistance R1 se trouve mise en circuit et le gain augmente. Il augmente une nouvelle fois quand la résistance R2 intervient à son tour lorsque Vc devient égal ou supérieur à Vo + E2. On obtient ainsi une loi de variation définie par trois segments rectilignes de pente croissante, qui peuvent fournir une bonne approximation de la partie supérieure de la courbe S' (figure 4) entre le point central X' de celle-ci, correspondant à Vc = Vo, et son point extrême M, atteint lorsque Vc prend sa valeur maximale Vm. Il est à signaler que le choix des semi-conducteurs déterminant la formation des segments rectilignes successifs est effectué de façon à obtenir des courbes de transition propres à supprimer l'angle de raccordement de ces segments.

Afin d'obtenir également, avec les mêmes éléments, la partie inférieure de la courbe S', symétrique de sa partie supérieure par rapport au point X', on utilise le circuit de la figure 6, qui se déduit de celui de la figure 5 essentiellement par l'adjonction d'un pont de quatre diodes D1, D2, D3, D4 destiné à assurer l'aiguillage de la tension d'entrée Ue de façon qu'elle attaque dans un sens ou dans le sens opposé, suivant que Vc est supérieur ou inférieur à Vo, le bipôle non linéaire formé par les résistances R1 et R2, respectivement en série avec une diode D5 et une diode Zener Z.

A cet effet, ledit bipôle est connecté entre les extrémités de l'une des diagonales du pont de diodes, tandis que les extrémités de l'autre diagonale, entre lesquelles est connectée la résistance Ro, constituant les bornes d'entrée et de sortie du réseau correcteur 5 ainsi constitué. Dans celui-ci, les tensions E1 et E2 sont respectivement égales à la tension directe de la diode D5 et à la tension de Zener de la diode Z, augmentées de la somme des tensions directes des diodes D1 et D3 ou des diodes D2 et D4 suivant la valeur de Vc par rapport à Vo.

Le réseau correcteur 5 constitue l'impédance d'entrée de l'amplificateur opérationnel 4; à ce réseau est appliquée, sous basse impédance via un amplificateur opérationnel 6 bouclé en gain unité, la tension Vc issue par exemple d'un potentiomètre P à variation linéaire (figure 1). Matériellement, le réseau 5 peut se présenter sous la forme d'un module à deux broches de connexion, aisément interchangeable.

La tension V'c délivrée par le circuit 3 est appliquée à l'une des entrées d'un comparateur 7 dont l'autre entrée reçoit signal Vt en dents de scie linéaires, chacune de celles-ci coïncidant avec une demi-alternance de la tension Ue. Ce signal est engendré par un générateur de courant constant i, de valeur invariable, chargeant un condensateur C qui est décharge périodiquement a chaque passage par zéro de la tension Ue. A chaque fois que le signal en dents de scie franchit un niveau de tension égal à V'c, une impulsion I est produite, qui déclenche l'amorçage de l'interrupteur commandé 1. De cette maninère, le déphasage de l'impulsion I dans la demi-alternance correspondante est proportionnel à la tension corrigée V'c, de sorte que la valeur efficace Ueff de la tension de sortie Us du gradateur est constamment proportionnelle à la valeur de la tension continue de commande Vc.

## Revendication

1. Dispositif de commande de gradateur électronique permettant de régler, en fonction d'un signal de commande (Vc), la puissance appliquée à un appareillage récepteur par une source d'alimentation électrique alternative sensiblement sinusoïdale, comprenant un interrupteur électronique commandé (1) dont la mise à l'état conducteur est déclenchée, au cours de chaque demi-alternance de la source d'alimentation, à un instant offrant, par rapport à la fin de la demi-alternance précédente, un déphasage (φt) variable suivant une loi de correction visant à assurer la proportionnalité de la puissance efficace appliquée à l'appareillage récepteur et de la valeur du signal de commande (Vc) dont est fonction ledit déphasage, *caractérisé* par le fait que le déphasage (φt) de l'instant de déclenchement est, par voie analogique, créé proportionnellement à la valeur d'un signal continu (V'c) qui varie avec le signal de commande (Vc) conformément à ladite loi de correction par l'intermédiaire d'un générateur de fonction (3).

2. Dispositif selon la revendication 1, caractérisé par le fait que le signal continu (V'c) est engendré, à partir du signal de commande (Vc), par un générateur de fonction (3) fournissant, grâce à un réseau non linéaire, une approximation par segments rectilignes raccordés de la loi de correction.

3. Dispositif selon la revendication 2, caractérisé par le fait que, la courbe (S') représentant la loi de compensation comportant deux moitiés symétriques par rapport à un point central (X'), le réseau non linéaire est conçu pour ne fournir l'approximation par segments rectilignes que de l'une des moitiés de ladite courbe et qu'un réseau auxiliaire de commutation associé ce réseau lui permet de fournir l'approximation de l'une et l'autre des moitiés symétriques.

4. Dispositif selon la revendication 3, caractérisé par le fait que le réseau non linéaire comprend une section linéaire et une section non linéaire et que seule la section non linéaire est commutée par le réseau auxiliaire.

5. Dispositif selon la revendication 4, caractérisé par le fait que le réseau auxiliaire est constitué par un pont de quatre redresseurs (D1, D2, D3, D4) entre deux bornes opposées duquel est connectée la section non linéaire (R1 - D5, R2 - Z) du réseau, la section linéaire (Ro) de ce dernier étant connectée entre les autres bornes opposées du pont, lesquelles constituent les bornes d'entrée et de sortie de l'ensemble (5) fourni par le réseau non linéaire et le réseau auxiliaire.

6. Dispositif selon l'une quelconque des revendications 2 à 5, caractérisé par le fait que le réseau non linéaire, éventuellement avec le réseau de commutation associé, constitue l'une des impédances d'entrée d'un amplificateur opérationnel (4) bouclé, son impédance de contre-réaction étant une résistance pure (R).

7. Dispositif selon la revendication 6 , caractérisé par le fait qu'à l'entrée non inverseuse de l'amplificateur opérationnel (4) est appliquée une tension (Vo) correspondant au point central (X') de symétrie de la courbe (S') représentant la loi de correction.

8. Dispositif selon l'une quelconque des revendications 2 à 7, caractérisé par le fait que le réseau non linéaire, avec le réseau de commutation éventuellement associé, constitue un circuit bipolaire (5) réalisé sous forme d'un module interchangeable à deux bornes.

9. Dispositif selon l'une quelconque des revendications 2 à 8, caractérisé par le fait qu'il comprend un comparateur (7) qui reçoit d'une part un signal (Vt) issu d'un générateur de rampes et formé de rampes linéaires successives commençant et finissant en synchronisme avec les demi-alternances de la source d'alimentation et d'autre part le signal continu (V'c) issu du générateur de fonction (3), et qui déclenche, à l'instant où ces deux signaux viennent à égalité, l'amorçage de l'interrupteur électronique commandé (1).

**Patentansprüche**

1. Elektronische Abstufungssteuervorrichtung, die es gestattet, abhängig von einem Steuersignal (Vc) die durch eine im wesentlichen sinusförmige elektrische Wechselspannungsquelle auf eine Empfängereinrichtung angewendete Leistung zu regeln, aufweisend einen gesteuerten elektronischen Schalter (1), dessen Schaltung in den leitenden Zustand im Verlauf jeder Halbperiode der Spannungsquelle in einem Zeitpunkt eingeleitet wird, der in bezug auf das Ende der vorhergehenden Halbperiode eine veränderliche Phasenverschiebung (φt) gemäß einem Korrekturgesetz bietet, wobei bezweckt wird, die Proportionalität der auf die Empfängereinrichtung angewendeten wirksamen Leistung und des Wertes des Steuersignals (Vc) sicherzustellen, von dem die Phasenverschiebung abhängig ist, *dadurch gekennzeichnet,* daß die Phasenverschiebung (φt) des Einleitungszeitpunktes auf analogem Weg proportional zum Wert eines Wechselstromsignals (V'c) erzeugt wird, das sich mit dem Steuersignal (Vc) gemäß dem Korrekturgesetz mittels eines Funktionsgenerators (3) ändert.

2. Vorrichtung nach Anspruch 1, *dadurch gekennzeichnet,* daß das Wechselstromsignal (V'c) ausgehend von dem Steuersignal (Vc) durch einen Funktionsgenerator (3) erzeugt wird, der dank eines nichtlinearen Netzwerkes eine Approximation durch verbundene geradlinige Segmente des Korrekturgesetzes liefert.

3. Vorrichtung nach Anspruch 2, *dadurch gekennzeichnet,* daß, wobei die das Kompensationsgesetz darstellende Kurve (S') zwei in bezug auf einen zentralen Punkt (X') symmetrische Hälften umfaßt, das nichtlineare Netzwerk konzipiert ist, um lediglich die Approximation durch geradlinige Segmente für die eine der Hälften der Kurve zu liefern, und daß es ein diesem zugeordnetes zusätzliches Umschaltnetzwerk gestattet, die Approximation der einen und der anderen der symmetrischen Hälften zu liefern.

4. Vorrichtung nach Anspruch 3, *dadurch gekennzeichnet,* daß das nichtlineare Netzwerk einen linearen Abschnitt und einen nichtlinearen Abschnitt aufweist und daß lediglich der nichtlineare Abschnitt durch das zusätzliche Netzwerk geschaltet wird.

5. Vorrichtung nach Anspruch 4, *dadurch gekennzeichnet,* daß das zusätzliche Netzwerk durch eine Brücke mit vier Gleichrichtern (D1, D2 D3, D4) zwischen zwei entgegengesetzten Anschlüssen gebildet ist, mit dem der nichtlineare Abschnitt (R1 - D5, R2 - Z) des Netzwerkes verbunden ist, wobei der lineare Abschnitt (Ro) des letzteren zwischen den anderen entgegengesetzten Anschlüssen der Brücke angeschlossen ist, wobei diese die Eingangs- und Ausgangsanschlüsse des Aufbaus (5) bilden, der durch das nichtlineare Netzwerk und das zusätzliche Netzwerk gebildet ist.

6. Vorrichtung nach einem beliebigen der Ansprüche 2 bis 5, *dadurch gekennzeichnet,* daß das nichtlineare Netzwerk, ggf. mit dem zugeordneten Umschaltnetzwerk, die eine der Eingangsimpedanzen eines zur Schleife geschalteten Operationsverstärkers (4) bildet, wobei seine Gegenkopplungsimpedanz ein reiner Widerstand (R) ist.

7. Vorrichtung nach Anspruch 6, *dadurch gekennzeichnet,* daß an den nichtinvertierenden Eingang des Operationsverstärkers (4) eine Spannung (Vo) angelegt wird, die dem zentralen Symmetriepunkt (X') der das Korrekturgesetz darstellenden Kurve (S') entspricht.

8. Vorrichtung nach einem beliebigen der Ansprüche 2 bis 7, *dadurch gekennzeichnet*, daß das nichtlineare Netzwerk mit dem gegebenenfalls zugeordneten Umschaltnetzwerk einen bipolaren Kreis (5) bildet, der in Form eines austauschbaren Moduls mit zwei Anschlüssen ausgeführt ist.

9. Vorrichtung nach einem beliebigen der Ansprüche 2 bis 8, *dadurch gekennzeichnet*, daß sie einen Komparator (7) umfaßt, der zum einen ein Signal (Vt), das von einem Rampengenerator ausgegeben wird und aus aufeinanderfolgenden linearen Rampen gebildet ist, die synchron mit den Halbperioden der Spannungsquelle beginnen und enden, und zum anderen das Gleichstromsignal (V'c) empfängt, das vom Funktionsgenerator (3) ausgegeben wird und das in dem Zeitpunkt, in dem diese beiden Signale gleich werden, die Ansteuerung des gesteuerten elektronischen Schalters (1) einleitet.

## Claims

1. Driver device for an electronic regulator providing control, as a function of a control signal (Vc), of the power applied to a receiving device by a source of substantially sinusoidal AC supply, comprising a controlled electronic switch (1) whose setting into the conductive state is triggered, during each half-cycle of the supply source, at a moment providing, with respect to the end of the preceding half-cycle, a variable phase shift (φt) in accordance with e correction law aiming to ensure the proportionality of the effective power applied to the receiving device and of the value of the control signal (Vc) of which said phase shift is a function, characterized in that the phase shift (φt) of the instant of triggering is produced, using analog means, in proportion to the value of a continuous signal (V'c) that veries with the control signal (Vc) in accordance with said correction law by means of a function generator (3).

2. Driver device according to claim 1, characterized in that the continuous signal (V'c) is generated, from the control signal (Vc), by a function generator (3) producing, by means of non-linear network, an approximation by linked rectilinear segments of the correction law.

3. Driver device according to claim 2, characterized in that, the curve (S') representing the compensation law comprising two symmetrical halves with respect to a central point (X'), the non-linear network is designed to produce the approximation by rectilinear segments of only one of the halves of said curve and in that an auxiliary switching network associated with said network enables it to supply the approximation of each of the symmetrical halves.

4. Driver device according to claim 3, characterized in that the non-linear network comprises a linear section and a non-linear section in that only the non-linear section is switched by the auxiliary network.

5. Driver device according to claim 4, characterized in that the auxiliary network is formed by a bridge comprising four rectifiers (D1, D2, D3, D4) between two opposite terminals of which is connected the non-linear section (R1 - D5, R2 - Z) of the network, the linear section (Ro) of the latter being connected between the other two opposite terminals of the bridge, which constitute the input and output terminals of the system (5) formed by the non-linear network and the auxiliary network.

6. Driver device according to any one of claims 2 to 5, characterized in that the non-linear network, optionally with its associated switching network, constitutes one of the input impedances of a closed loop operational amplifier (4), its feedback impedance being a pure resistance (R).

7. Driver device according to claim 6 characterized in that at the non-inverting input of the operational aplifier (4) there is applied a voltage (Vo) corresponding to the central symmetry point (X') of the curve (S') representing the correction law.

8. Driver device according to any one of claims 2 to 7, characterized in that the non-linear network, with its optionally associated switching network, constitutes a bipolar circuit (5) produced in the form of interchangeable two-terminal module.

9. Driver device according to any one of claims 2 to 8, characterized in that it comprises a comparator (7) that receives on the one hand a signal (Vt) supplied by a ramp generator and consisting of successive linear ramps starting and finishing in synchronism with the half-cycles of the supply, and on the other the continuous signal (V'c) supplied by the function generator (3), and which sets, at the instant when these two signals become equal, the triggering of the controlled electronic switch (1).

$Fig-1$

$Fig-2$

Fig-3

Fig-4

EP 0 186 590 B1

$V_c$   $R_o$   $R$   $V'_c$   $E1$   $R1$   $R2$   $E2$   $Vo$   4

Fig-5

$V_c$   $R_o$   $R$   $D1$   $D4$   $D5$   $Z$   $D2$   $R1$   $R2$   $D3$   $V'_c$   $Vo$   6   4   3   5

Fig-6